# EUROPÄISCHE PATENTSCHRIFT

(11) **EP 1 774 790 B1**
(45) Veröffentlichungstag und Bekanntmachung des Hinweises auf die Patenterteilung: **24.12.2008**
(21) Anmeldenummer: 05776246.0
(22) Anmeldetag: 27.07.2005
(51) Int. Cl.: H04N 7/26, H04N 7/46, H04N 7/50

(54) **VERFAHREN UND VORRICHTUNG ZUM CODIEREN UND DECODIEREN**
CODING AND DECODING METHOD AND DEVICE
PROCEDE ET DISPOSITIF DE CODAGE ET DE DECODAGE

(30) Priorität: 05.08.2004 DE 102004038110
(43) Veröffentlichungstag der Anmeldung: 18.04.2007
(73) Patentinhaber: SIEMENS AKTIENGESELLSCHAFT, 80333 München (DE)
(72) Erfinder: AMON, Peter, 85591 Vaterstetten (DE); HUTTER, Andreas, 81673 München (DE); TIMMERMANN, Benoit, 85604 Zorneding (DE)
(86) Internationale Anmeldenummer: PCT/EP2005/053675
(87) Internationale Veröffentlichungsnummer: WO 2006/015947

(56) Entgegenhaltungen:
- WO-A-97/17797
- ZHANG X ET AL: "ADAPTIVE QUADTREE CODING OF MOTION-COMPENSATED IMAGE SEQUENCES FOR USE ON THE BROADBAND ISDN" IEEE TRANSACTIONS ON CIRCUITS AND SYSTEMS FOR VIDEO TECHNOLOGY, IEEE INC. NEW YORK, US, Bd. 3, Nr. 3, 1. Juni 1993 (1993-06-01), Seiten 222-229, XP000385795 ISSN: 1051-8215
- J.-R. OHM: DIGITALE BILDCODIERUNG, 1995, XP002351205 Springer Verlag, Berlin, DE
- TAMBANKAR A ET AL: "An overview of H.264 / MPEG-4 part 10" VIDEO/IMAGE PROCESSING AND MULTIMEDIA COMMUNICATIONS, 2003. 4TH EURASIP CONFERENCE FOCUSED ON 2-5 JULY 2003, PISCATAWAY, NJ, USA,IEEE, 2. Juli 2003 (2003-07-02), Seiten 1-51, XP010650106 ISBN: 953-184-054-7

## Beschreibung

Die Erfindung betrifft ein Verfahren zur Videocodierung gemäß dem Oberbegriff des Anspruchs 1, ein Verfahren zur Decodierung gemäß dem Gattungsbegriff des Anspruchs 14 sowie Codierer zur Videocodierung gemäß dem Gattungsbegriff des Anspruchs 15 und eine Decodiervorrichtung gemäß dem Gattungsbegriff des Anspruchs 16.

Digitale Videodaten werden für eine Speicherung oder Übertragung in der Regel komprimiert, um das enorme Datenvolumen signifikant zu reduzieren. Die Kompression erfolgt dabei sowohl durch Elimination der in den Videodaten enthaltenen Signalredundanz als auch durch Beseitigung der für das menschliche Auge nicht wahrnehmbaren irrelevanten Signalteile. Dies wird in der Regel durch ein hybrides Codierverfahren erreicht, bei dem das zu codierende Bild zunächst zeitlich prädiziert und der verbleibende Prädiktionsfehler anschließend in den Frequenzbereich, zum Beispiel durch eine diskrete Cosinustransformation, transformiert und dort quantisiert und durch einen variablen Längencode codiert wird. Die Bewegungsinformation und die quantisierten Spektralkoeffizienten werden schließlich übertragen.

Je besser diese Vorhersage der nächsten zu übertragenden Bildinformation ist, desto kleiner ist der nach der Prädiktion verbleibende Prädiktionsfehler und um so weniger Datenrate muss anschließend für die Codierung dieses Fehlers aufgewendet werden. Eine wesentliche Aufgabe bei der Kompression von Videodaten besteht also darin, eine möglichst exakte Prädiktion des zu codierenden Bildes aus der bereits zuvor übertragenden Bildinformation zu gewinnen.

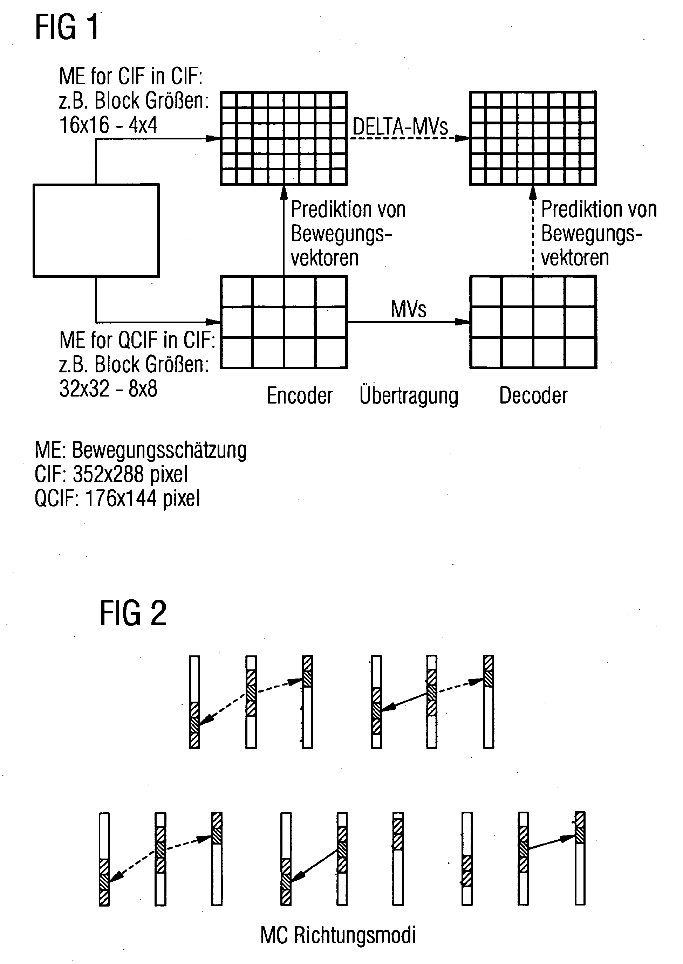

Die Prädiktion eines Bildes wird bisher dadurch bewirkt, dass das Bild zunächst zum Beispiel in regelmäßige Teilstücke, typischerweise quadratische Blöcke der Größe 8x8 oder 16x16 Bildpunkte, eingeteilt wird, und für jeden dieser Bildblöcke anschließend eine Prädiktion aus der bereits im Empfänger bekannten Bildinformation durch Bewegungskompensation ermittelt wird. (Es können sich allerdings auch Blöcke mit unterschiedlicher Größe ergeben.) Derartige Vorgehensweise lässt sich der Figur 1 entnehmen. Es können hierbei zwei grundsätzliche Fälle der Prädiktion unterschieden werden:
- Uni-direktionale Prädiktion: Die Bewegungskompensation erfolgt hier ausschließlich auf der Basis des zuvor übertragenden Bildes und führt zu sogenannten "P-Frames".
- Bi-direktionale Prädiktion: Die Prädiktion des Bildes erfolgt durch Überlagerung von zwei Bildern, von denen eines zeitlich voran liegt und ein weiteres zeitlich nachfolgt und das zu sogenannten "B-Frames" führt. Zu beachten ist hierbei, dass beide Referenzbilder bereits übertragen worden sind.

Entsprechend dieser beiden möglichen Fälle der Prädiktion ergeben sich bei bewegungskompensierten zeitliche Filterungen ("Motion Compensated Temporal Filtering", MTCF) fünf Richtungsmodi im Verfahren von MSRA [1] wie sie in Figur 2 zu entnehmen ist.

MCTF-basierte skalierbaren Videocodierung werden eingesetzt, um eine gute Videoqualität für einen sehr großen Bereich möglicher Bitraten zu gewährleisten. Die heute bekannten MCTF-Algorithmen zeigen dabei aber unakzeptable Ergebnisse für reduzierte Bitraten, was darauf zurückzuführen ist, dass zu wenig Textur (Blockinformationen) im Verhältnis zu den Informationen, welche auf die Bewegungsinformationen (Blockstrukturen und Bewegungsvektoren) eines durch eine Bildfolge definierten Videos Bezug nehmen, vorhanden sind.

Es bedarf daher einer skalierbaren Form der Bewegungsinformation, um ein optimales Verhältnis zwischen Textur und Bewegungsdaten bei jedweder Bitrate und auch Auflösung zu erzielen. Hierzu ist aus [1] eine Lösung von MSRA (Microsoft Research Asia) bekannt, welche den aktuellen Stand der MCTF-Algorithmen darstellt.

Dabei schlägt die MSRA-Lösung vor, Bewegungen schichtenweise darzustellen, respektive sie in sich sukzessive verfeinerten Strukturen aufzulösen. Das MSRA-Verfahren erzielt damit, dass die Qualität von Bildern bei niedrigen Bitraten im Allgemeinen verbessert wird.

Diese Lösung hat jedoch den Nachteil, dass sie zu einigen Verschiebungen im rekonstruierten Bild führen, welche auf einen Versatz zwischen den Bewegungsinformationen und der Textur zurückzuführen sind.

Das Dokument ZHANG X ET AL: "Adaptive Quadtree Coding Of Motion-Compensated Image Sequences for Use on the Broadband ISDN", IEEE Transactions On Circuits And Systems For Video Technology, Bd. 3, Nr. 3, 1. Juni 1993 (vgl. insbesonders Seiten 222-223, Absatz II; Abbildungen 1-4) ist der nächstliegende Stand der Technik und beschreibt ein skalierbares Verfahren zur Videocodierung, das auf eine skalierbare Quadtree-Darstellung basiert ist.

Die der Erfindung zugrunde liegende Aufgabe ist es ein Verfahren zum Codieren und Decodieren, sowie einen Codierer und Decoder anzugeben, welche eine verbesserte Videocodierung gewährleisten.

Diese Aufgabe wird ausgehend von dem Verfahren zur Codierung gemäß dem Oberbegriff des Anspruchs 1 durch dessen kennzeichnende Merkmale gelöst.

Ferner wird diese Aufgabe durch ein Verfahren zur Decodierung gemäß dem Gattungsbegriff des Anspruchs 14, dem Codierer gemäß dem Gattungsbegriff des Anspruchs 15 sowie dem Decodierer gemäß dem Gattungsbegriff des Anspruchs 16 durch deren Merkmale gelöst.

Durch diese Verfahrensweise wird der Unterschied zwischen Texturinformationen minimiert und zudem lassen sich diese Informationen mit minimalem Aufwand codieren. Zudem verschwindet der Versatz für die Fälle, wo das gröbste Bewegungsvektorfeld gewählt worden ist, so dass eine Verbesserung der Bildqualität auch bei niedrigeren Bitraten sowie niedrigeren Auflösungen gewährleistet ist.

Vorzugsweise werden hierzu zur Unterschiedsermittlung hinzugekommene Subblöcke erfasst, wobei zu den Unterschiedsermittlungen alternativ bzw. ergänzend die Eigenschaften der Subblöcke erfasst werden.

Wird als Subblockeigenschaft die Blockgröße der Subblöcke erfasst, erhält man einen in praxi sehr guten Indikator für den Grad der Feinheit der erzeugten Blockstrukturen.

Wird für die Unterschiedsermittlung nur derjenige Teilblock der ersten Blockstruktur herangezogen, der dem Teilblock der zweiten Blockstruktur entspricht, können die Differenzen der Texturinformationen noch weiter reduziert werden.

Wobei vorzugsweise nur diejenigen Subblöcke der zweiten Blockstruktur in die modifizierte zweite Blockstruktur übernommen werden, deren Blockgröße einen definierbaren Schwellwert erreichen. Hierdurch wird erreicht, dass nicht eine komplette Blockstruktur, d.h. ein komplettes Bewegungsvektorfeld übertragen werden muss, sondern lediglich der signifikanteste Teil der Struktur. Dies führt zum einen zu einer Reduzierung der zu übertragenen Information und zudem trotz dieser Reduktion zu einer Eliminierung bzw. Reduktion des Versatzes zu das Artefakte encodierten Bild reduziert bzw. eliminiert werden. In praxi ist dabei der Einsatz eines definierbaren Schwellwertes von besonders großem Vorteil, da beispielsweise durch Simulation oder Experimentalversuche ermittelte optimale Werte hier eingestellt werden können, von denen aufgrund der Ergebnisse der Simulation bzw. Experimente sehr gute Ergebnisse zu erwarten sind.

Bevorzugt wird dabei der Schwellwert derart definiert, dass er ein Verhältnis der Blockgröße eines Subblocks der zweiten Blockstruktur zu einer in einem zum Vergleich herangezogenen Bereich der ersten Blockstruktur enthaltenen Blockgröße angibt, welche dem kleinsten Subblock des Bereiches zugeordnet ist.

Des Weiteren wird bei einer Weiterbildung vorgesehen, zu kennzeichnen, dass die übernommenen Subblöcke nicht-dyadisch sein können.

Eine weitere Verbesserung der Ergebnisse hinsichtlich der Darstellung des decodierten Bildes lässt sich erreichen, wenn als erste Blockstruktur einer dritten Auflösungsstufe die modifizierte zweite Blockstruktur der zweiten Auflösungsstufe verwendet wird, wobei die zweite Auflösungsstufe eine niedrigere Bildpunktanzahl aufweist als die dritte Auflösungsstufe. Hiermit werden also mögliche weitere Blockstrukturen je höherer Auflösungsstufe zur Erzeugung der modifizierten zweiten Blockstruktur herangezogen, bei denen die modifizierte zweite Blockstruktur der jeweils nächstvorhergehenden Auflösungsstufe zum erfindungsgemäßen Vergleich verwendet wird.

Für eine Decodierung von Vorteil ist es auch, dass die Codierung derart erfolgt, dass in die zweite modifizierte Blockstruktur nicht übernommene Subblöcke jeweils gekennzeichnet werden.

Hierzu ist es vorzugsweise vorgesehen, dass die Kennzeichnung durch die Verwendung eines insbesondere als not_refind bezeichneten Richtungsmodus erfolgt.

Die der Erfindung zugrunde liegende Aufgabe wird auch durch das Verfahren zum Decodieren einer codierten Bildfolge dadurch gelöst, dass unter Berücksichtigung der in der Bildfolge enthaltenden nach einer nach dem erfindungsgemäßen Verfahren zum Codieren erzeugten zweiten modifizierten Blockstrukturen eine skalierte Darstellung der Bildfolge erzeugt wird.

Einen Beitrag zur Lösung der Aufgabe leisten auch der erfindungsgemäße Codierer, welcher Mittel zur Durchführung des Verfahrens aufweist sowie ein entsprechender Decodierer, welcher Mittel zum Decodieren einer nach dem Verfahren erzeugten codierten Bildfolge aufweist.

Weitere Einzelheiten der Erfindungen sowie Vorteile werden anhand der Figuren 1 bis 5 mit Bezug auf ein Ausführungsbeispiel der Erfindung erläutert. Dabei zeigt:
Figur 1 das Modell einer Bewegungsschätzung zum Generieren skalierbarer Bewegungsinformation,
Figur 2 die hierzu notwendigen Richtungsmodi,
Figur 3 die hierbei zur Anwendung kommenden Subblockgrößen,
Figur 4 die schematische Darstellung erfindungsgemäß erzeugter Blockstrukturen,
Figur 5 den Vergleich eines nach dem erfindungsgemäßen Verfahren codierten Bildes mit einem nach dem Stand der Technik codierten Bild.

In Figur 1 ist schematisch die aus dem Stand der Technik bekannte MSRA-Lösung dargestellt, die zum besseren Verständnis der Erfindung erläutert wird, da sie bei dem beschriebenen Ausführungsbeispiel zumindest in Teilen zum Einsatz kommt.

Gemäß MSRA wird die angesprochene Multilayer-Bewegungsschätzung in jeder temporären Schicht (Layer) durchgeführt. Die Bewegungsschätzung ist dabei bei einer festen räumlichen Auflösung mit verschiedenen Makroblockgrößen realisiert, damit das sich ergebende Bewegungsvektorfeld an die decodierte Auflösung adaptiert. Beispielsweise wird, wenn es sich bei der originalen Auflösungsstufe um ein CIF-codiertes Format handelt und die decodierte Auflösungsstufe als QCIF-Format erfolgt, die Bewegungsschätzung auf der Auflösungsebene des CIF-Formats bzw. der CIF-Auflösung durchgeführt, wobei dies mit einer Blockgröße von 32 x 32 als Basis und mit einer Makroblockgröße von 8 x 8 als kleinste Blockgröße erfolgt. Wenn es sich dagegen bei dem decodierten Format um das CIF-Format handelt, wird die Größe der Makroblöcke um den Faktor 2 herunter skaliert, wie es aus der Figur 1 zu entnehmen ist.

Wie des Weiteren in Figur 1 zu erkennen ist, werden im unteren Zweig der dort dargestellten Verarbeitung für das Decodieren des im QCIF-Format vorhandenen Blocks die ursprünglichen Bewegungsvektoren übertragen, während für jede höhere Schicht, beispielsweise jene, die für das Decodieren des CIF-Blocks dient, lediglich die Differenzinformation bezüglich der Bewegungsvektoren verwendet wird. Dabei kann ein einzelner Bewegungsvektor einer niedrigeren Schicht zur Prädiktion mehreren Vektoren der höheren Schicht dienen, wenn der Block in kleinere Teilblöcke aufgesplittet wird.

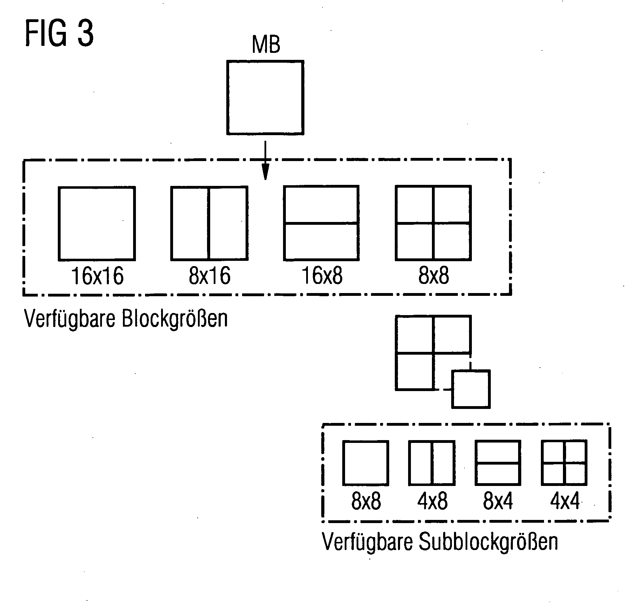

Unterschiedliche Modi weisen dabei auf die Richtung der Bewegungskompensation hin, wie dies bereits angesprochen und in Figur 2 dargestellt ist, während aus Figur 3 zu erkennen ist, dass die Blockstrukturen gemäß dem MSRA-Verfahren nach der gleichen Methode codiert werden, wie sie im Standard MPEG-4 AVC (Advanced Video Coding) [2] verwendet wird.

Um eine die Blockstruktur und die Richtung der Bewegungskompensation auszuwählen, welche encodiert werden sollen, ist gemäß MSRA-Ansatz vorgesehen, eine sogenannte Kostenfunktion zu nutzen, die für diese Funktion definiert worden ist und welche unter dem Begriff "Rate Distortion Optimisation" bekannt ist.

In der Multilayer-Darstellung der Bewegung gemäß MSRA werden verschiedene Bewegungsdeskriptionen, welche an verschiedene örtliche Auflösungen angepasst sind, für die gleiche temporäre Schicht (Frame Rate) generiert. Dabei wird die Bewegungsschätzung, welche zu den höheren Auflösungen gehört, als bereichernde Information (enhancement layer/information) betrachtet, auf Grundlage einer Detektion der groben Bewegungsinformation. Da der durch das grobe Bewegungsvektorfeld erzeugte Restfehlerblock sehr viel Energie enthält, wird nur derjenige Restfehlerblock übertragen, welcher nach der feinsten Bewegungskompensation erzeugt wird. Dies führt, vor allem wenn die grobe Bewegungsinformation gewählt wird, zu sehr starken Artefakten in dem rekonstruierten Restfehlerbild, wobei dies sogar selbst bei hoher Bitrate erfolgt.

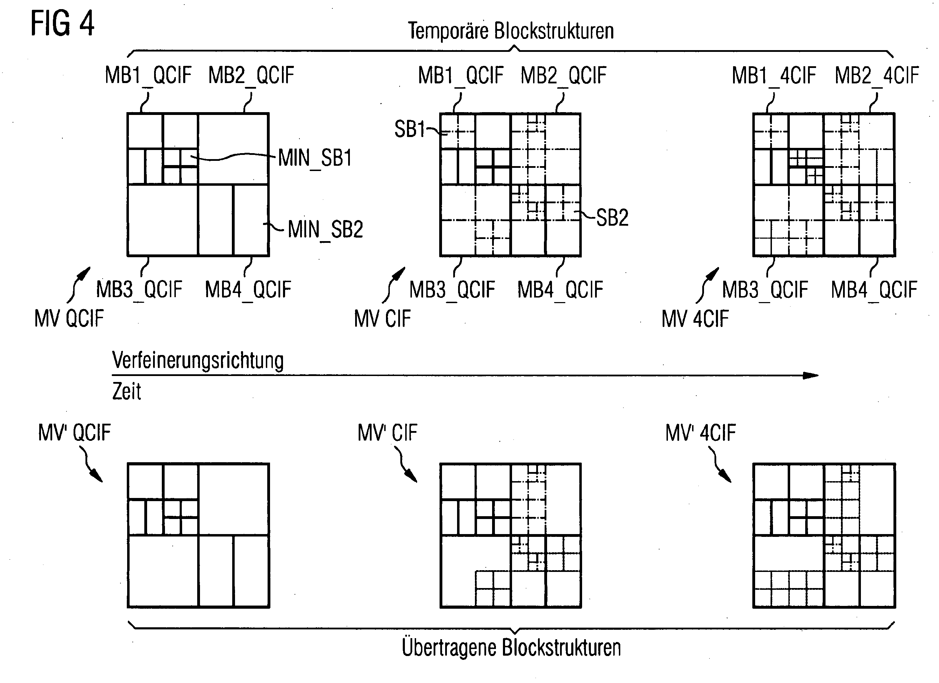

In Figur 4 ist dargestellt, wie gemäß der Erfindung erzeugte temporäre Blockstrukturen unter Anwendung des erfindungsgemäßen Verfahrens zu Blockstrukturen führen, die letztendlich übertragenen werden sollen.

Zu erkennen sind drei temporäre Blockstrukturen MV_QCIF, MV_CIF und MV_4CIF. Dabei ist jede dieser Blockstrukturen erfindungsgemäß jeweils einer Auflösungsstufe zugeordnet, wobei mit Auflösungsstufe das Format der Auflösung bezeichnet wird, mit der ein nach dem erfindungsgemäßen Verfahren codiertes Videosignal, welches aus Bildfolgen besteht, dargestellt werden kann.

Für das vorliegende Ausführungsbeispiel handelt es sich dabei um das Common Intermediate Format (CIF), das QCIF sowie das 4CIF Format.

QCIF stellt dabei eine erste Auflösungsstufe, dass heißt die niedrigste Auflösungsstufe für das erfindungsgemäße Verfahren gewählte Auflösungsstufe dar, so dass ihr erfindungsgemäß auch eine erste Blockstruktur MV_QCIF zugeordnet wird, während CIF eine zweite Auflösungsstufe darstellt, für die erfindungsgemäß eine zweite Blockstruktur MV_CIF erzeugt wird.

Das Erzeugen der Blockstrukturen erfolgt dabei im Rahmen eines Bewegungsschätzungsalgorithmus, beispielsweise unter Nutzung des bereits angesprochenen MCTF und/oder MSRA Verfahrens.

Zu erkennen ist des Weiteren, dass die temporären Blockstrukturen MV_QCIF, MV_CIF und MV_4CIF sukzessive verfeinernde Subblockstrukturen aufweisen, die dadurch gekennzeichnet sind, dass ausgehend von je temporärer Blockstruktur MV_QCIF, MV_CIF und MV_4CIF definierten Teilblöcken MB1_QCIF...MB4_QCIF immer feiner werdende weitere Subblöcke hinzukommen.

Ferner ist aus der Darstellung zu erkennen, dass die temporären Blockstrukturen MV_QCIF, MV_CIF und MV_4CIF die gleiche örtliche Auflösung haben, dies also trotz der sich von Auflösungsstufe zu Auflösungsstufe erhöhenden Bildpunktanzahl konstant bleibt.

In Figur 4 sind des weiteren die zu übertragenden bzw. letztendlich, beispielsweise für eine Streaming-Anwendung, übertragenen Blockstrukturen MV'_QCIF, MV'_CIF und MV'_4CIF zu erkennen, welche unter Anwendung des erfindungsgemäßen Verfahrens aus den temporären Blockstrukturen MV_QCIF, MV_CIF und MV_4CIF dadurch erzeugt werden, dass jeweils eine zu einer hohen Auflösungsstufe gehörige Blockstruktur mit einer zu einer nächstniedrigeren Auflösungsstufe gehörenden Blockstruktur verglichen wird und als Ergebnis eine zur betrachteten Auflösungsstufe gehörige modifizierte Blockstruktur erzeugt wird, welche Subblockstrukturen aufweist, die nur eine Teilmenge des der zur gleichen Auflösungsstufe gehörigen temporären Blockstruktur enthält, wobei es sich hierbei nicht um eine echte Teilmenge handelt, die den Fall ausschließen würde, dass die Subblockstruktur der modifizierten Blockstruktur mit der Subblockstruktur der entsprechenden temporären Blockstruktur identisch ist, sondern, da es vielmehr es sogar so ist, dass dieser Sonderfall nach dem erfindungsgemäßen Verfahren auch auftreten kann, es sich lediglich um eine beispielsweise aus der Mathematik bekannten (einfachen) Teilmenge handelt.

Dieser erfindungsgemäße Algorithmus soll im Folgenden etwas detaillierter erläutert werden.

Erfindungsgemäß wird mit der Erzeugung einer zur niedrigsten Auflösungsstufe gehörenden Blockstruktur begonnen. Aus dieser ersten Blockstruktur MV_QCIF ergibt sich gemäß der Erfindung dabei unmittelbar die modifizierte Blockstruktur MV'_QCIF, da für diesen Fall naturgemäß kein Vergleich mit einer vorherigen Blockstruktur erfolgen kann. Die sich unmittelbar ergebende modifizierte Blockstruktur MV'_QCIF hat daher die gleiche Subblockstruktur, wie sie die erste Blockstruktur MM_QCIF aufweist.

Erfindungsgemäß wird in einem weiteren Schritt zur nächsthöheren Auflösungsstufe, in diesem Fall CIF, eine zweite Blockstruktur MV_CIF erzeugt. Zu erkennen ist dabei, dass in die zweite Blockstruktur MV_CIF weitere Subblöcke hinzugekommen sind, welche zu einer feineren Subblockstruktur führen, wie es im Vergleich hierzu die erste Blockstruktur MV_QCIF aufweist. Die Subblöcke bzw. Subblockstrukturen, welche hinzugekommen sind, sind dabei in der Figur strichpunktiert dargestellt.

Erfindungsgemäß wird daher in einem nächsten Schritt ein Vergleich durchgeführt, bei dem die hinzugekommenen Subblöcke dahingehend überprüft werden, ob sie eine Blockgröße aufweisen, die mehr als viermal kleiner ist, als die kleinste Blockgröße des entsprechenden Teilbereiches der ersten Blockstruktur.

Trifft dies zu, so wird die entsprechende Subblockstruktur in einer modifizierten zweiten Blockstruktur MV'_CIF aufgenommen, während in den Fällen, wo der zu untersuchende Subblock eine geringere Verfeinerung darstellt, auf die Übernahme der Subblockstruktur in der zu übertragenden modifizierten zweiten Blockstruktur verzichtet wird.

Um dies besser erläutern zu können, sind in der Figur 4 beispielhaft zwei der in der zweiten Blockstruktur MV_CIF enthaltenen Subblöcke herausgegriffen worden, nämlich ein erster Subblock SB1 und ein zweiter Subblock SB2.

Der erste Subblock SB1 befindet sich in einem ersten Teilblock MB1_CIF der zweiten Blockstruktur MV_CIF. Entsprechend wird erfindungsgemäß in einem zum ersten Teilblock MB1_CIF der zweiten Blockstruktur MV_CIF korrespondierenden ersten Teilblock MB1_QCIF der ersten Blockstruktur MV_QCIF untersucht, welches die hier auftretende kleinste Subblockgröße ist. Bei dem vorliegenden Beispiel wird diese minimale Blockgröße durch einen minimalen ersten Subblock MIN_SB1 definiert. Wie zu erkennen ist, entspricht die Größe des ersten Subblocks der Größe des ersten minimalen Subblocks, so dass in diesem Fall gar keine Verfeinerung vorliegt. Entsprechend wird erfindungsgemäß in der zu übertragenden zweiten Blockstruktur MV_CIF die dem ersten Subblock zugrunde liegende Subblockstruktur nicht übernommen, so dass in der Darstellung gemäß Figur 4 der zweiten modifizierten Blockstruktur MV_CIF das strichpunktierte Gitter an der entsprechenden Stelle fehlt.

Bei dem Vergleich wird unter anderem auch ein zweiter Subblock SB2 für den Vergleich herangezogen. Da der zweite Subblock SB2 sich in einen vierten Teilblock MB4_CIF der zweiten Blockstruktur MV_CIF enthalten ist, wird entsprechend in einem vierten Teilblock MB4_QCIF der ersten Blockstruktur MV_QCIF nach einer minimalen Subblockgröße gesucht. Dies ist durch einen zweiten minimalen Subblock MIN_SB2 gegeben, der in diesem Fall den vierten Teilblock MB4_QCIF der ersten Blockstruktur MV_QCIF exakt teilt. Wie zu erkennen ist, stellt in diesem Fall die Größe des zweiten Subblocks SB2 ein Achtel der Größe des minimalen zweiten Subblocks MIN_SB2 dar, so dass sogar eine achtfache Verfeinerung im Vergleich zur ersten Blockstruktur MV_QCIF gegeben ist. Erfindungsgemäß wird daher die den zweiten Subblock definierende Subblockstruktur auch in die modifizierte zweite Blockstruktur MV'_CIF übernommen. Gleiches geschieht für all diejenigen Blöcke der zweiten Blockstruktur MV_CIF wie in der Darstellung gemäß Figur 4 an den gestrichelten Strukturen der modifizierten zweiten Blockstruktur MV'_CIF zu erkennen ist.

Wie sich aus einem Vergleich der zweiten Blockstruktur MV_CIF und der modifizierten zweiten Blockstruktur MV'_CIF zeigt, sind nicht alle Subblockstrukturen der zweiten Blockstruktur MV_CIF übernommen worden. Damit nun eine derartig codierte Bildfolge richtig dargestellt werden kann, wird bei der Codierung der Blockstrukturen, die übertragen werden sollen, eine Kennzeichnung derjenigen Subblöcke hineincodiert, welche nicht in die modifizierten Blockstrukturen übernommen worden sind. Das erfindungsgemäße Verfahren findet dabei auch bei weiteren Auflösungsstufen in der gleichen Art seine Anwendung. Beispielsweise wird gemäß dem vorliegenden Ausführungsbeispiel für das Format 4CIF ebenfalls eine Blockstruktur MV_4CIF erzeugt. Erfindungsgemäß wird diese nun wiederum als eine zweite Blockstruktur verwandt, während die erste Blockstruktur von durch die vorhergehende zweite Blockstruktur MV_CIF gegeben ist. Die sich durch den Vergleich der beiden Blockstrukturen ergebende zweite modifizierte Blockstruktur MV'_4CIF ist dabei in der Darstellung von Figur 4 wiederum nur durch einen Teil der hinzugekommenen Subblockstrukturen verfeinert worden, welche in der Darstellung punktiert gezeichnet sind.

Alternativ oder ergänzend kann für den Vergleich statt eine temporäre Blockstruktur eine bereits erzeugte übertragene, d.h. modifizierte zweite Blockstruktur als erste Blockstruktur genutzt werden.

Es ist dabei erfindungsgemäß nicht erforderlich, für alle in der Bildfolge codierten Auflösungsstufen erfindungsgemäß zu übertragene Blockstrukturen zu erzeugen, sondern beispielsweise nur in den Teilauflösungen der genannten Auflösungen, d.h. beispielsweise nur für CIF im Falle, dass QCIF, CIF oder 4CIF angewendet wurde oder nur für CIF, für den Fall, das QCIF und CIF angewendet wurde. In Praxi ist es vielmehr ausreichend, dies auf im Vergleich zu allen vorhandenen Auflösungsstufen mittlere Auflösungsstufen anzuwenden, da bei einer mittleren Auflösungsebene die beste Performance gegeben ist, weil hierbei ein vielfaches Up and Down Sampling der Blockstrukturen und der Bewegungsvektoren vermieden werden kann. Hierbei wird durch einen Parameter jeweils die Datenrate für die Bewegungsinformation für die verschiedenen örtlichen Auflösungsstufen eingestellt, sodass sich auf jeder Auflösungsstufe ein optimales Verhältnis der Datenrate für Bewegungsinformation und Texturinformation ergibt.

Die Erfindung ist dabei nicht auf das anhand der Figur 4 erläuterte Ausführungsbeispiel, sondern umfasst alle im Rahmen des fachmännischen Könnens in Frage kommenden Realisierungen, die den erfindungsgemäßen Kern:

Das, insbesondere gemäß MSRA, erzeugte komplette Bewegungsvektorfeld (Temporäre Blockstrukturen MV_QCIF, MV_CIF und MV_4CIF), welches encoderseitig definiert bzw. vorhanden ist, eben nicht komplett zu übertragen, sondern vielmehr lediglich den signifikanteste Teil dieses Bewegungsvektorfelds.

Ein wesentlicher Vorteil des erfindungsgemäßen Algorithmus ist dabei, die Verbesserung der Bildqualität auch bei niedrigen Bitraten sowie auch bei niedrigen Auflösungen.

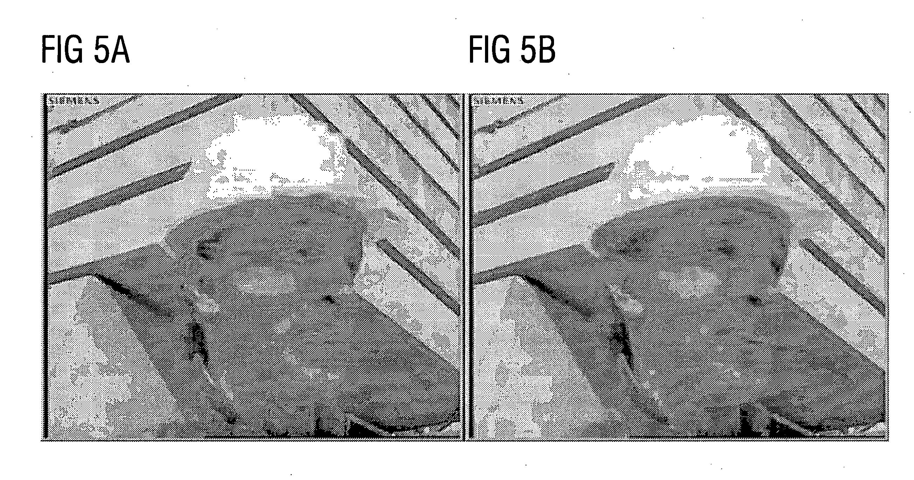

Dies ist beispielsweise an den beiden Bildern der Figur 5 zu erkennen. Das auf der linken Seite dargestellte Bild zeigt dabei ein gemäß dem Format CIF codiertes Bild, welches bei 15 Hz und 128 bps mit dem aus dem Stand der Technik bekannten kompletten Bewegungsvektorfeld encodiert wurde, auf der rechten Seite ist dagegen ein mit demselben Format und der gleichen Bitrate encodiertes Bild gezeigt, welches aber im Vergleich zum vorhergehenden Bild mit erfindungsgemäßen Verfeinerungsmethoden erzeugt decodiert wurde.
Ein Vergleich der beiden Bilder ergibt dabei, dass das erfindungsgemäß (en-)codierte Bild deutlich weniger (Codier-)Artefakte aufweist.

Diese Artefakte sind also dank des erfindungsgemäßen Verfahrens stark reduziert worden, da man im Grunde damit den Versatz zwischen der Bewegungsinformation und der Textur begrenzt, in dem erfindungsgemäß eben nur denjenigen Teil des zweiten Bewegungsvektorfeldes verfeinert, welcher am stärksten oder sehr stark vom groben Bewegungsvektorfeld differiert.

Diese Verfahrensweise muss natürlich einem die Daten decodierenden Decoder mitgeteilt werden. Hierzu ist nach dem erfindungsgemäßen Algorithmus vorgesehen, einen neuen Richtungsmodus einzuführen, den man beispielsweise "not_refind" bezeichnen könnte. Wenn nun der Decoder diesen Richtungsmodus decodiert, weiß der Decoder, dass die Bewegungsvektoren und die Blockstruktur, welche zu der vorhergehenden Bewegungsschätzungsschicht korrespondieren, anzuwenden ist, also beispielsweise diejenige gemäß MSRA-Verfahren. Eine Weiterverfeinerung der Bewegungsvektoren ist also in so einem Fall nicht genutzt.

### Literaturverzeichnis

[1] Jizheng Xu, Ruiqin Xiong, Bo Feng, Gary Sullivan, Ming-Chieh Lee, Feng Wu, Shipeng Li, "3D subband video coding using Barbell lifting", ISO/IEC JTC1/SC29/ WG11 MPEG 68th meeting, M10569/s05, Munich, March 2004.
[2] ITU-T and ISO/IEC JTC1, "Advanced Video Coding for Generic Audiovisual Services," ITU-T Recommendation H.264 - ISO/IEC 14496-10 AVC, 2003.

## Patentansprüche

1. Verfahren zur Videocodierung von Bildfolgen bei dem Bilder der Bildfolge derart skaliert codiert werden, dass die sich ergebenden Videodaten Informationen enthalten, die eine Darstellung der Bilder in einer Vielzahl sich unterscheidender Auflösungsstufen je Bild gewährleisten, wobei die jeweilige Auflösungsstufe durch die Anzahl von Bildpunkten je Bilddarstellung der Bilder definiert wird, wobei die Codierung blockbasiert erfolgt und eine Blockstruktur erzeugt wird, die das Bild in der jeweiligen Auflösungsstufe in Blöcke, Teilblöcke und Subblöcke unterteilen kann, wobei diese Unterteilung eine etwaige in der Bildfolge enthaltene Bewegung beschreibt, und wobei die Blockstruktur ausgehend von einem Block in Teilblöcke und zum Teil die Teilblöcke (MB1_QCIF..MB4_QCIF, MB1_CIF..MB4_CIF, MB1_4CIF..MB4_4CIF in sukzessive feiner unterteilende Subblöcke unterteilt wird, mit folgenden Schritten:
a) temporär wird für eine erste Auflösungsstufe eine erste Blockstruktur (MV_QCIF; MV_CIF) und für eine zweite Auflösungsstufe eine zweite Blockstruktur (MV_CIF; MV_4CIF) erzeugt, wobei die erste Auflösungsstufe eine niedrigere Bildpunktanzahl als die zweite Auflösungsstufe aufweist,
b) die zweite Blockstruktur (MV_CIF; MV_4CIF) wird mit der ersten Blockstruktur (MV_QCIF; MV_CIF) derart verglichen, dass Unterschiede in der Unterteilung der Blockstrukturen als Strukturunterschiede ermittelt werden,
c) auf Grundlage von Eigenschaften der Strukturunter-schiede wird überprüft, welcher Teil der zweiten Blockstruktur in eine modifizierte zweite Blockstruktur (MV'_CIF, MV'_4CIF) aufzunehmen ist, und die modifizierte zweite Blockstruktur auf Grundlage der Überprüfung erzeugt wird,
d) die modifizierte zweite Blockstruktur (MV'_CIF, MV'_4CIF) wird der Codierung der Bildfolge zugrunde gelegt.

2. Verfahren nach Anspruch 1, **dadurch gekennzeichnet, dass** zur Unterschiedsermittlung hinzugekommene Subblöcke erfasst werden.

3. Verfahren nach Anspruch 1 oder 2, **dadurch gekennzeichnet, dass** zur Unterschiedsermittlung Subblockeigenschaften erfasst werden.

4. Verfahren nach Anspruch 3, **dadurch gekennzeichnet, dass** als Subblockeigenschaft die Blockgröße der Subblöcke erfasst wird.

5. Verfahren nach einem der vorhergehenden Ansprüche, **dadurch gekennzeichnet, dass** für die Unterschiedsermittlung nur derjenige Teilblock (MB1_QCIF..MB4QCIF; MB1_CIF..MB4_CIF) der ersten Blockstruktur (MV_QCIF; MV_CIF) herangezogen wird, der dem Teilblock (MB1_CIF..MB4 CIF; MB1_4CIF..MB4_4CIF) der zweiten Blockstruktur (MV_CIF; MV_4CIF) entspricht.

6. Verfahren nach einem der vorhergehenden Ansprüche, **dadurch gekennzeichnet, dass** die Erzeugung der zweiten modifizierten Blockstruktur auf Grundlage einer Schwellwertentscheidung erfolgt.

7. Verfahren nach em der Ansprüche 3 bis 6, **dadurch gekennzeichnet, dass** nur diejenigen Subblöcke der zweiten Blockstruktur (MV_CIF; MV_4CIF) in die modifizierte zweite Blockstruktur (MV'_CIF; MV'_4CIF) übernommen werden, deren Blockgröße einen definierbaren Schwellwert erreichen.

8. Verfahren nach dem Anspruch 7, **dadurch gekennzeichnet, dass** der Schwellwert derart definiert wird, dass er ein Verhältnis der Blockgröße eines Subblocks der zweiten Blockstruktur (MV_CIF; MV_4CIF) zu einer in einem zum Vergleich herangezogenen Bereich der ersten Blockstruktur (MV_QCIF; MV_CIF) enthaltenen Blockgröße angibt, welche dem kleinsten Subblock des Bereichs zugeordnet ist.

9. Verfahren nach einem der vorhergehenden Ansprüche, **dadurch gekennzeichnet, dass** die übernommenen Subblöcke nicht-dyadisch geteilt sein können.

10. Verfahren nach einem der Ansprüche, **dadurch gekennzeichnet, dass** als erste Blockstruktur (MV_CIF) einer dritten Auflösungsstufe die modifizierte zweite Blockstruktur (MV'_4CIF) der zweiten Auflösungsstufe verwendet wird, wobei die zweite Auflösungsstufe eine niedrigere Bildpunktanzahl aufweist als die dritte Auflösungsstufe.

11. Verfahren nach einem der Ansprüche 7 bis 10, **dadurch gekennzeichnet, dass** die Codierung derart erfolgt, dass in die zweite modifizierte Blockstruktur (MV_CIF; MV_4CIF) nicht übernommen Subblöcke jeweils **gekennzeichnet** werden.

12. Verfahren nach einem der Ansprüche 9 bis 11, **dadurch gekennzeichnet, dass** die Codierung derart erfolgt, dass nicht-dyadisch geteilte Subblöcke jeweils **gekennzeichnet** werden.

13. Verfahren nach dem vorhergehenden Anspruch, **dadurch gekennzeichnet, dass** die Kennzeichnung durch die Verwendung eines bezeichneten Richtungsmodus erfolgt.

14. Verfahren zum Decodieren codierten Bildfolge, **dadurch gekennzeichnet, dass** unter Berücksichtigung der in der Bildfolge enthaltenen nach einem Verfahren gemäß einem der vorhergehenden Ansprüche erzeugten modifizierten zweiten Blockstrukturen eine skalierte Darstellung der Bildfolge erzeugt wird.

15. Codierer zur Erzeugung einer codierten Bildfolge **gekennzeichnet durch** Mittel zur Durchführung des Verfahrens nach einem der Ansprüche 1 bis 13.

16. Decodierer **gekennzeichnet durch** Mittel zum Decodieren einer nach dem Verfahren nach einem der Ansprüche 1 bis 13 erzeugten codierten Bitfolge.

## Claims

1. Method for video coding of image sequences in which images in the image sequence are encoded in a scaled manner in such a way that the resulting video data contains information which ensures representation of the images in a plurality of different levels of image resolution, the respective resolution level being defined by the number of pixels per image representation of the images, the encoding taking place in a block-based manner and a block structure being created which can subdivide the image in the respective resolution level into blocks, partial blocks and sub-blocks, said subdivision describing a motion possibly contained in the image sequence, and the block structure, starting from one block, being subdivided into partial blocks, some of said partial blocks (MB1_QCIF..MB4_QCIF, MB1-CIF..MB4_CIF, MB1_4CIF..MB4_4CIF) being successively more finely subdivided into sub-blocks, comprising the following steps:
a) for a first resolution level a first block structure (MV_QCIF; MV_CIF) and for a second resolution level a second block structure (MV_CIF; MV_4CIF) is temporarily created, the first resolution level having a smaller number of pixels than the second resolution level,
b) the second block structure (MV_CIF; MV_4CIF) is compared with the first block structure (MV-QCIF; MV_CIF) in such a way that differences in the subdivision of the block structures are determined as structural differences,
c) on the basis of characteristics of the structural differences a check is made to see which part of the second block structure is to be included in a modified second block structure (MV'_CIF, MV'_4CIF), and the modified second block structure is created on the basis of the check,
d) the modified second block structure (MV'_CIF, MV'_4CIF) is used as the basis for encoding the image sequence.

2. Method according to claim 1, **characterised in that** added sub-blocks are detected to determine differences.

3. Method according to claim 1 or 2, **characterised in that** sub-block characteristics are detected to determine differences.

4. Method according to claim 3, **characterised in that** the block size of the sub-blocks is detected as the sub-block characteristic.

5. Method according to one of the preceding claims, **characterised in that** only the partial block (MB1_QCIF..MB4_QCIF; MB1_CIF..MB4_CIF) of the first block structure (MV_QCIF; MV_CIF) corresponding to the partial block (MB1_CIF..MB4_CIF; MB1_4CIF..MB4_4CIF) of the second block structure (MV_CIF; MV_4CIF) is used for determining differences.

6. Method according to one of the preceding claims, **characterised in that** the second modified block structure is created on the basis of a threshold decision.

7. Method according to one of claims 3 to 6, **characterised in that** only sub-blocks of the second block structure (MV_CIF; MV_4CIF) whose block size attains a definable threshold are taken over into the modified second block structure (MV'_CIF; MV'_4CIF).

8. Method according to claim 7, **characterised in that** the threshold is defined in such a way that it specifies a ratio of the block size of a sub-block of the second block structure (MV_CIF; MV_4CIF) to a block size contained in a region of the first block structure (MV_QCIF; MV_CIF) used for comparison and which is assigned to the smallest subblock of said region.

9. Method according to one of the preceding claims, **characterised in that** the adopted sub-blocks can be divided in non-dyadic manner.

10. Method according to one of the claims, **characterised in that** the modified second block structure (MV'_4CIF) of the second resolution level is used as the first block structure (MV_CIF) of a third resolution level, the second resolution level having a smaller number of pixels than the third resolution level.

11. Method according to one of claims 7 to 10, **characterised in that** the encoding is performed in such a way that subblocks not taken over into the second modified block structure (MV_CIF; MV_4CIF) are identified in each case.

12. Method according to one of claims 9 to 11, **characterised in that** the encoding is performed in such a way that non-dyadically divided sub-blocks are identified in each case.

13. Method according to the preceding claim, **characterised in that** identification is performed using a designated directional mode.

14. Method for decoding an encoded image sequence, **characterised in that** a scalable representation of the image sequence is created taking into account the modified second block structures contained in the image sequence that were created according to a method as claimed in one of the preceding claims.

15. Encoder for creating an encoded image sequence, **characterised by** means for carrying out the method according to one of claims 1 to 13.

16. Decoder **characterised by** means for decoding an encoded bit sequence created according to the method as claimed in one of claims 1 to 13.

## Revendications

1. Procédé pour le codage vidéo de suites d'images dans lequel des images de la suite d'images sont codées en étant mises à l'échelle de manière telle que les données vidéo résultantes contiennent des informations qui assurent une représentation des images dans une pluralité de niveaux de résolution différents pour chaque image, le niveau de résolution respectif étant défini par le nombre de points d'image pour chaque représentation des images, le codage étant effectué sur la base de blocs, et une structure de blocs étant générée, laquelle peut subdiviser l'image, dans le niveau de résolution respectif, en blocs, blocs partiels et sous-blocs, cette subdivision décrivant un éventuel mouvement contenu dans la suite d'images, et la structure de blocs, partant d'un bloc, étant subdivisée en blocs partiels et les blocs partiels (MB1_QCIF ..., MB4_QCIF, MB1_CIF ..., MB4_CIF, MB1_4CIF ..., MB4_4CIF) étant, en partie, subdivisés en sous-blocs successifs qui subdivisent plus finement, comportant les étapes suivantes:
a) génération temporaire d'une première structure de blocs (MV_QCIF; MV_CIF) pour un premier niveau de résolution et d'une deuxième structure de blocs (MV_CIF; MV_4CIF) pour un deuxième niveau de résolution, le premier niveau de résolution présentant un nombre de points d'image inférieur à celui du deuxième niveau de résolution,
b) comparaison de la deuxième structure de blocs (MV_CIF; MV_4CIF) avec la première structure de blocs (MV_QCIF; MV_CIF) de manière telle que des différences dans la subdivision des structures de blocs sont détectées en tant que différences structurelles,
c) contrôle, sur la base de caractéristiques des différences structurelles, pour établir quelle partie de la deuxième structure de bloc doit être admise dans une deuxième structure de blocs modifiée (MV'_CIF, MV'_4CIF) et génération de la deuxième structure de blocs modifiée sur la base du contrôle,
d) prise de la deuxième structure de blocs modifiée (MV'_CIF, MV'_4CIF) comme base du codage de la suite d'images.

2. Procédé selon la revendication 1, **caractérisé en ce que** des sous-blocs venus s'ajouter sont saisis aux fins de la détection de différences.

3. Procédé selon la revendication 1, **caractérisé en ce que** des caractéristiques de sous-blocs sont saisies aux fins de la détection de différences.

4. Procédé selon la revendication 3, **caractérisé en ce que** la taille de bloc des sous-blocs est saisie en tant que caractéristique des sous-blocs.

5. Procédé selon l'une des revendications précédentes, **caractérisé en ce que,** aux fins de la détection de différences, il est fait appel uniquement au bloc partiel (MB1-QCIF ..., MB4QCIF; MBL-CIF ..., MB4_CIF) de la première structure de blocs (MV_QCIF; MV_CIF) qui correspond au bloc partiel (MB1_CIF ..., MB4 CIF; MB1-4CIF ..., MB4_4CIF) de la deuxième structure de blocs (MV_CIF; MV_4CIF).

6. Procédé selon l'une des revendications précédentes, **caractérisé en ce que** la génération de la deuxième structure de blocs modifiée se produit sur la base d'une décision de valeur seuil.

7. Procédé selon l'une des revendications 3 à 6,
**caractérisé en ce que** sont pris en compte dans la deuxième structure de blocs modifiée (MV'_CIF; MV'_4CIF) seuls les sous-blocs de la deuxième structure de blocs (MV_CIF; MV_4CIF) dont la taille de bloc atteint une valeur seuil définissable.

8. Procédé selon la revendication 7, **caractérisé en ce que** la valeur seuil est définie de manière telle qu'elle indique un rapport entre la taille de bloc d'un sous-bloc de la deuxième structure de blocs (MV_CIF; MV_4CIF) et une taille de bloc contenue dans une zone de la première structure de blocs (MV_QCIF; MV_CIF) à laquelle il est fait appel pour comparaison, laquelle taille de bloc est associée au plus petit sous-bloc de ladite zone.

9. Procédé selon l'une des revendications précédentes, **caractérisé en ce que** les sous-blocs pris en compte peuvent être divisés de manière non dyadique.

10. Procédé selon l'une des revendications précédentes, **caractérisé en ce que** la deuxième structure de blocs modifiée (MV'_4CIF) du deuxième niveau de résolution est utilisée en tant que première structure de blocs (MV_CIF) d'un troisième niveau de résolution, le deuxième niveau de résolution présentant un nombre de points d'image inférieur à celui du troisième niveau de résolution.

11. Procédé selon l'une des revendications 7 à 10, **caractérisé en ce que** le codage se produit de manière telle que des sous-blocs non pris en compte dans la deuxième structure de blocs modifiée (MV_CIF; MV_4CIF) sont respectivement marqués.

12. Procédé selon l'une des revendications 9 à 11, **caractérisé en ce que** le codage se produit de manière telle que des sous-blocs divisés de manière non dyadique sont respectivement marqués.

13. Procédé selon la revendication précédente, **caractérisé en ce que** le marquage se produit par l'utilisation d'un mode d'orientation désigné.

14. Procédé de décodage d'une suite d'images codée, **caractérisé en ce qu'**une représentation mise à l'échelle de la suite d'images est générée compte tenu des deuxièmes structures de blocs modifiées contenues dans la suite d'images et générés selon un procédé selon l'une des revendications précédentes.

15. Codeur pour générer une suite d'images codée, **caractérisé par** des moyens pour exécuter le procédé selon l'une des revendications 1 à 13.

16. Décodeur, **caractérisé par** des moyens pour décoder une suite de bits codée, générée selon le procédé selon l'une des revendications 1 à 13.
